# EUROPEAN PATENT APPLICATION

(11) **EP 3 950 324 A1**
(43) Date of publication of application: **09.02.2022**
(21) Application number: 20776315.2
(22) Date of filing: 13.03.2020
(51) Int. Cl.: B32B 27/00, E04H 9/16, C09K 3/18, C08J 5/16, C08J 5/18, B29C 59/04, B32B 3/30

(54) **FILM**

(30) Priority: 27.03.2019 JP 2019061862
(71) Applicant: NITTO DENKO CORPORATION, Ibaraki-shi Osaka 567-8680 (JP)
(72) Inventor: MATSUKUMA, Daisuke, Ibaraki-shi, Osaka 567-8680 (JP); ONA, Haruka, Ibaraki-shi, Osaka 567-8680 (JP); NAKAMURA, Yoshihiro, Ibaraki-shi, Osaka 567-8680 (JP); FUJITA, Hiroyuki, Ibaraki-shi, Osaka 567-8680 (JP)
(74) Representative: Gill Jennings & Every LLP
(86) International application number: PCT/JP2020/011301
(87) International publication number: WO 2020/195987

(57) **Abstract**

An object of the present invention is to provide a film capable of enhancing snow sliding property and highly preventing snow accretion and/or ice accretion on a structure. The film of the present invention includes, as an outermost layer, an oil-containing layer containing an oil component in a resin, wherein the oil component bleeds from a surface of the oil-containing layer at a temperature not more than a predetermined temperature, the surface of the oil-containing layer has a concave-convex configuration, and the arithmetic mean height (Sa) in a 3.2 cm×3.2 cm region on the surface of the oil-containing layer is 4 µm or more.

## Description

### TECHNICAL FIELD

The present invention relates to a film, more specifically, a film used as a surface covering material for preventing adhesion of snow or ice to a surface of an object such as aircraft, railroad, automobile, wind-power generator, housing, traffic signal and signboard.

### BACKGROUND ART

Adhesion of ice to an object surface (ice accretion) or adhesion of snowflakes due to snowfall (snow accretion) causes damage or trouble in various fields. For example, ice accretion on aircraft wings, snow accretion and freezing on the locomotive bottom, snow accretion on headlights of an automobile, ice accretion on blades of a wind-power generator, and snow accretion and freezing on traffic signal lamps, etc. can be a trouble for their services, operations and safety. Furthermore, snow accretion and freezing on roof of housing, signboard, etc. can be a cause for the damage for these structures or damage to person or the like due to snowslide.

In order to avoid such damage or trouble, studies are being intensively made on measures for protecting a structure from snow accretion, and, for example, various films or sheets having a snow accretion-preventing function or a snow-sliding function have been proposed.

For example, Patent Literature 1 proposes a snow-easily-sliding solid in which a plurality of grooves extending in one direction are arranged in at least part of a solid surface to form projections and recesses at intervals of 2 µm or more and 4 mm or less, the projection part of the projections and recesses is rendered hydrophilic, having a water contact angle of 30° or less, and the recess part is rendered water-repellent, having a water contact angle of 90° or more.

In addition, Patent Literature 2 proposes a snow accretion-preventing and snow-sliding film or sheet with the surface being water-repellent and having a concave-convex configuration in which a ridge part linearly formed along a predetermined direction and a recess part linearly formed along the predetermined direction at a position lower than the ridge part and adjoined to the ridge part are arranged alternately, wherein at least part of a surface extending between ridge parts adjoining each other across the recess part has a curved surface curving in a concave manner along a direction perpendicular to the predetermined direction.

### CITATION LIST

### PATENT LITERATURE

Patent Literature 1: JP-A-2003-226867 (the term "JP-A" as used herein means an "unexamined published Japanese patent application")
Patent Literature 2: JP-A-2018-162553

### SUMMARY OF INVENTION

### TECHNICAL PROBLEM

An effect of removing snow or ice on a structure surface by the above-described film or sheet having a snow-sliding function may be expected, but when the amount of snowfall per time is increased, snow accumulation on a structure also increases, and therefore, it is desirable to let snow naturally slide in a shorter time. Thus, further improvement of snow sliding property is demanded.

The present invention has been made in consideration of the problem above, and an object thereof is to provide a film having enhanced snow sliding property and thereby enabling excellent prevention of snow accretion and/or ice accretion on a structure.

### SOLUTION TO PROBLEM

As a result of many intensive studies, the present inventors have found that when a film surface is constituted by an oil-containing layer allowing an oil component to exude (bleed) at a temperature not more than a predetermined temperature and a concave-convex configuration is provided to the surface, the above-described object can be attained. The present invention has been accomplished based on this finding.

Namely, the present invention provides a film including, as an outermost layer, an oil-containing layer containing an oil component in a resin, wherein the oil component bleeds from a surface of the oil-containing layer at a temperature not more than a predetermined temperature, the surface of the oil-containing layer has a concave-convex configuration, and an arithmetic mean height (Sa) in a 3.2 cm×3.2 cm region on the surface of the oil-containing layer is 4 µm or more.

In a preferred embodiment of the film, the arithmetic mean height (Sa) is preferably 10 µm or more.

Also, in a preferred embodiment of the film, a maximum pitch distance of the concave-convex configuration is preferably 2,000 µm or more.

Furthermore, in a preferred embodiment of the film, the film is preferably a film for preventing snow or ice from accumulating with time on a surface of a target object.

In addition, the present invention provides a production method of a film, including the following steps of (a) and (b), or a step of (c):
(a) a step of forming a coating film by using a resin composition containing a polymer component and an oil component and forming a concave-convex configuration on a surface of the coating film, and
(b) a step of curing the coating film having formed thereon the concave-convex configuration,
   or
(c) a step of forming a coating film by using a resin composition containing a polymer component and an oil component, curing the coating film, and then disposing, on one surface of the cured coating film, a member having projections and recesses on its surface so as to form a concave-convex configuration on a surface of the coating film.

### ADVANTAGEOUS EFFECTS OF INVENTION

In the film of the present invention, a film surface is constituted by an oil-containing layer containing an oil component that bleeds at a temperature not more than a predetermined temperature, and furthermore, a concave-convex configuration is provided to the surface, so that the snow sliding property can be enhanced to allow snowpack or ice adhered to a structure to fall by gravity in a short time.

### DESCRIPTION OF EMBODIMENTS

The embodiments of the present invention are described in greater detail below, but the present invention is not limited to the following embodiments by any means.

Here, in the present invention, the term "film" encompasses a film and a sheet defined in JIS K 6900:1994. In the definition of JIS K 6900:1994, the film indicates a thin flat product in which the thickness is extremely small as compared with the length and width and the maximum thickness is arbitrarily limited and which is usually supplied in the form of a roll, and the sheet indicates a flat product which is thin and in which the thickness is generally small for the length and width. The boundary between film and sheet is uncertain, and in the present invention, the sheet is encompassed by the concept of the film.

Also, in the present description, the "mass" has the same meaning as "weight".

The film of the present invention includes, as the outermost layer, an oil-containing layer containing an oil component in a resin, and a surface of the oil-containing layer has a concave-convex configuration. The oil component bleeds from a surface of the oil-containing layer at a temperature not more than a predetermined temperature and covers the film surface. This configuration of the film of the present invention produces a portion where the snowpack or ice adhered to the surface of the film cannot be in direct contact with the film, and not only the frictional force decreases to facilitate gravity-falling but also the slipperiness of the film surface is further enhanced by the bled oil component. Consequently, snowpack or ice can be allowed to naturally fall in a shorter time, and snow or ice can be prevented from accumulating with time.

In the present invention, "a concave-convex configuration is provided to a surface" means that when a surface of the film is photographed by a laser microscope and the average height in a 3.2 cm×3.2 cm region is calculated, the arithmetic mean height (Sa) is 4 µm or more.

### <Oil-Containing Layer>

The oil-containing layer is a layer where an oil component is contained in a resin. The oil-containing layer is configured to contain a polymer component and an oil component. The polymer component forms a matrix, and the oil component is contained in the matrix.

### (Polymer Component)

The polymer component is not particularly limited but includes, for example, a silicone resin, a polyurethane resin, a polyurethane acrylic resin, a vinyl chloride resin, a polyester resin, elastomers, a fluororesin, a polyamide resin, a polyolefin resin (e.g., polyethylene, polypropylene), an acrylic resin, etc. Among these, from the viewpoint that the bleed effect of the oil component and the outdoor exposure durability are excellent, a silicone resin is preferred.

As the silicone resin, an arbitrary appropriate silicone resin can be employed as long as the effects of the present invention are not impaired. The silicone resin may be only one silicone resin or may be two or more silicone resins. The silicone resin may be a condensation-type silicone resin or may be an addition-type silicone resin. Also, the silicone resin may be a one-component silicone resin which is dried alone (for example, one-component room temperature vulcanizing (RTV) resin), or may be a two-component silicone resin (for example, two-component room temperature vulcanizing (RTV) resin).

The silicone resin includes, specifically, as a commercially available product, for example, one-component RTV rubbers produced by Shin-Etsu Chemical Co., Ltd. (e.g., KE-3423, KE-347, KE-3475, KE-3495, KE-4895, KE-4896, KE-1830, KE-1884, KE-3479, KE-348, KE-4897, KE-4898, KE-1820, KE-1825, KE-1831, KE-1833, KE-1885, KE-1056, KE-1151, KE-1842, KE-1886, KE-3424G, KE-3494, KE-3490, KE-40RTV, KE-4890, KE-3497, KE-3498, KE-3493, KE-3466, KE-3467, KE-1862, KE-1867, KE-3491, KE-3492, KE-3417, KE-3418, KE-3427, KE-3428, KE-41, KE-42, KE-44, KE-45, KE-441, KE-445, KE-45S, etc.), two-component RTV rubbers produced by Shin-Etsu Chemical Co., Ltd. (e.g., KE-1800T-A/B, KE-66, KE-1031-A/B, KE-200, KE-118, KE-103, KE-108, KE-119, KE-109E-A/B, KE-1051J-A/B, KE-1012-A/B, KE-106, KE-1282-A/B, KE-1283-A/B, KE-1800-A/B/C, KE-1801-A/B/C, KE-1802-A/B/C, KE-1281-A/B, KE-1204-A/B, KE-1204-AL/BL, KE-1280-A/B, KE-513-A/B, KE-521-A/B, KE-1285-A/B, KE-1861-A/B, KE-12, KE-14, KE-17, KE-113, KE-24, KE-26, KE-1414, KE-1415, KE-1416, KE-1417, KE-1300T, KE-1310ST, KE-1314-2, KE-1316, KE-1600, KE-1603-A/B, KE-1606, KE-1222-A/B, KE-1241, etc.), silicone sealants produced by Shin-Etsu Chemical Co., Ltd. (e.g., KE-42AS, KE-420, KE-450, etc.), rubber compounds produced by Shin-Etsu Chemical Co., Ltd. (e.g., KE-655-U, KE-675-U, KE-931-U, KE-941-U, KE-951-U, KE-961-U, KE-971-U, KE-981-U, KE-961T-U, KE-971T-U, KE-871C-U, KE-9410-U, KE-9510-U, KE-9610-U, KE-9710-U, KE-742-U, KE-752-U, KE-762-U, KE-772-U, KE-782-U, KE-850-U, KE-870-U, KE-880-U, KE-890-U, KE-9590-U, KE-5590-U, KE-552-U, KE-582-U, KE-552B-U, KE-555-U, KE-575-U, KE-541-U, KE-551-U, KE-561-U, KE-571-U, KE-581-U, KE-520-U, KE-530B-2-U, KE-540B-2-U, KE-1551-U, KE-1571-U, KE-152-U, KE-174-U, KE-3601SB-U, KE-3711-U, KE-3801M-U, KE-5612G-U, KE-5620BL-U, KE-5620W-U, KE-5634-U, KE-7511-U, KE-7611-U, KE-765-U, KE-785-U, KE-7008-U, KE-7005-U, KE-503-U, KE-5042-U, KE-505-U, KE-6801-U, KE-136Y-U, etc.), LIMS (Liquid silicone rubber Injection Molding System) produced by Shin-Etsu Chemical Co., Ltd. (e.g., KEG-2000-40A/B, KEG-2000-50A/B, KEG-2000-60A/B, KEG-2000-70A/B, KEG-2001-40A/B, KEG-2001-50A/B, KE-1950-10A/B, KE-1950-20A/B, KE-1950-30A/B, KE-1950-35A/B, KE-1950-40A/B, KE-1950-50A/B, KE-1950-60A/B, KE-1950-70A/B, KE-1935A/B, KE-1987A/B, KE-1988A/B, KE-2019-40A/B, KE-2019-50A/B, KE-2019-60A/B, KE-2017-30A/B, KE-2017-40A/B, KE-2017-50A/B, KE-2090-40A/B, KE-2090-50A/B, KE-2090-60A/B, KE-2090-70A/B, KE-2096-40A/B, KE-2096-50A/B, KE-2096-60A/B, etc.), LR7665 Series produced by Wacker Asahikasei Silicone Co., Ltd., LR3033 Series produced by Wacker Asahikasei Silicone Co., Ltd., TSE3032 Series produced by Momentive Performance Materials Inc., and SILGARD 184 produced by Dow Corning Toray Co., Ltd., etc.

Among these, in view of phase separability from the oil component that bleeds to the surface at a predetermined temperature, a two-component silicone resin is preferred, and specifically, KE-1950-10A/B, KE-1950-20A/B, KE-1950-30A/B, KE-1950-35A/B, KE-1950-40A/B, KE-1950-50A/B, KE-1950-60A/B, KE-1950-70A/B, KE-1935A/B, etc. are more preferred.

### (Oil Component)

The oil component is not particularly limited as long as it bleeds out to a surface of the film and has either one of a snow accretion prevention function and an ice accretion prevention function (hereinafter, sometimes referred to as a snow accretion/ice accretion prevention function). The oil component includes, for example, a silicone oil, a fluorine oil, a hydrocarbon-based oil, a polyether-based oil, an ester-based oil, a phosphorus compound-based oil, a mineral oil, etc. Among these, in view of snow accretion/ice accretion prevention effect and bleed effect, a silicone oil is preferred. As for the oil component, one component may be used alone, or two or more components may be used in combination.

The silicone oil includes, for example, a silicone oil represented by formula (1):

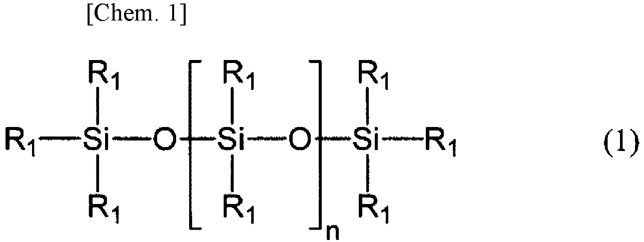

In formula (1), each Ri independently represents an alkyl group having a carbon number of 1 to 10, an aryl group, an aralkyl group, a fluoroalkyl group, a polyether group, a carbinol group, an amino group, an epoxy group, a silanol group, or a hydroxyl group, and n represents an integer of 0 to 150. A plurality of n may be the same or different.

Ri in formula (1) is preferably an alkyl group having a carbon number of 1 to 10, a phenyl group, a polyether group, a carbinol group, an amino group, or an epoxy group.

The silicone oil represented by formula (1) includes, specifically, for example, a dimethyl silicone oil where all Ri are a methyl group, a phenylmethyl silicone oil where part of methyl groups of the dimethyl silicone oil above are replaced by a phenyl group, a polyether group-containing silicone oil where part of methyl groups are replaced by a polyether group, a carbinol group-containing silicone oil where part of methyl groups are replaced by a carbinol group, an amino group-containing silicone oil where part of methyl groups are replaced by an amino group, and an epoxy group-containing silicone oil where part of methyl groups are replaced by an epoxy group. Among these, a phenylmethyl silicone oil, a polyether group-containing silicone oil, and a carbinol group-containing silicone oil are preferred, because in the case of using a silicone resin as the polymer component, they have no reactivity with the silicone resin or no self-condensability.

The number average molecular weight of the silicone oil represented by formula (1) is preferably from 100 to 40,000, more preferably from 200 to 20,000.

The viscosity at 25°C of the silicon oil is preferably from 1 to 10,000 cSt, more preferably from 5 to 5,000 cSt, still more preferably from 8 to 1,000 cSt, yet still more preferably from 10 to 500 cSt. When the viscosity at 25°C is in the range above, the snow-sliding/ice-sliding property is excellent, so that an excellent snow accretion/ice accretion prevention effect can be obtained.

The silicone oil includes, specifically, for example, silicone oils produced by Momentive Performance Materials Japan LLC (e.g., TSF431, TSF433, TSF437, TSF451 Series), silicone oils produced by Shin-Etsu Chemical Co., Ltd. (e.g., KF96L Series, KF96 Series, KF69 Series, KF99 Series, KF50 Series, KF54 Series, KF410 Series, KF412 Series, KF414 Series, FL Series, KF-6000, KF-6001, KF-6002, KF-6003, X-22-4039, PAM-E, KF-8010, KF-8012, KF-8008, KF-4917, X-22-163), silicone oils produced by Dow Corning Toray Co., Ltd. (e.g., BY16-846 Series, SF8416 Series, SH200 Series, SH203 Series, SH230 Series, SF8419 Series, FS1265 Series, SH510 Series, SH550 Series, SH710 Series, FZ-2110 Series, FZ-2203 Series, BY16-201), silicone oils produced by Wacker Asahikasei Silicone Co., Ltd. (e.g., AK Series, AKF Series, L Series, W Series, AP Series, AR Series, AS Series), etc.

Among these, in view of phase separability from the polymer component, use of, TSF437, KF50 Series, KF54 Series, KF-6000, KF-6001, KF-6002, etc. is preferred, and in order to increase the affinity of the oil component for the polymer component, it is more preferable to use KF96 Series, TSF451 Series, etc. in combination.

The fluorine oil includes, for example, perfluoropolyether, perfluorodecalin, perfluorooctane, etc. In view of chemical stability, perfluoropolyether is preferred. The perfluoropolyether includes, for example, compounds represented by the structural formula: A-(C₃F₆O)ₓ(CF₂O)_{y}(C₂F₄O)_{z}-B (wherein the end group A is any of -F, -CF₃, -C₂F₅, -C₃F₇, - CF(CF₃)OCF₃, -OF, -OCF₃, -OC₂F₅, -OC₃F₇, and -OCF(CF₃)OCF₃, the end group B is any of -CF₃, -C₂F₅, -C₃F₇, and -CF(CF₃)OCF₃, x, y and z are 0 or a positive integer, x+y+z>1, and the viscosity at 25°C is from 50 to 500,000 cSt). Specific examples of the perfluoropolyether include CF₃O-(CF₂CF(CF₃)O)ₓ(CF₂O)_{y}-CF₃ (wherein x and y are as described above), CF₃O-(CF₂O)_{y}(C₂F₄O)_{z}-CF₃ (wherein y and z are as described above), CF₃O-(CF₂CF(CF₃)O)ₓ-CF₃ (wherein x is as described above), and F-(CF₂CF₂CF₂O)ₓ-C₂F₅ (wherein x is as described above), etc.

### (Other Components)

In addition, as long as the effects of the present invention are not impaired, the oil-containing layer may contain other components according to use. Other components include, for example, a solvent, a liquid paraffin, a surfactant, an antimicrobial agent, an ultraviolet absorber, a filler, a crosslinking agent, etc. One of these may be used alone, or two or more thereof may be used in combination.

The solvent includes, for example, ethyl acetate and a liquid hydrocarbon such as hexane, heptane, benzene, toluene, xylene and 1-tetradecene.

The liquid paraffin includes, as a commercially available produce, for example, P-40, P-55, P-60, P-70, P-80, P-100, P-120, P-150, P-200, P-260, and P-350 all produced by MORESCO Corporation; and a hydrocarbon-based liquid paraffin produced by Wako Pure Chemical Industries, Ltd.

The surfactant includes, for example, an anionic surfactant, a nonionic surfactant, an amphoteric surfactant, and a cationic surfactant.

The anionic surfactant includes, for example, an alkylbenzenesulfonate, an alkyl or alkenyl ether sulfate, an alkyl or alkenyl sulfate, an α-olefin sulfonate, an α-sulfofatty acid or ester salt, an alkanesulfonate, a saturated or unsaturated fatty acid salt, an alkyl or alkenyl ether carboxylate, an amino acid-type surfactant, an N-acylamino acid-type surfactant, and an alkyl or alkenyl phosphate ester or a salt thereof, etc. The nonionic surfactant includes, for example, a polyoxyalkylene alkyl or alkenyl ether, a polyoxyethylene alkylphenyl ether, a higher fatty acid alkanolamide or an alkylene oxide adduct thereof, a sucrose fatty acid ester, an alkyl glycoside, a fatty acid glycerol monoester, and an alkylamine oxide, etc. The amphoteric surfactant includes, for example, a carboxy-type or sulfobetaine-type amphoteric surfactant, etc. The cationic surfactant includes, for example, a quaternary ammonium salt, etc.

The antimicrobial agent includes, for example, azoxystrobin, benalaxyl, benomyl, bitertanol, bromuconazol, captafol, captan, carbendazim, chinomethionate, chlorothalonil, chlozolinate, cyprodinil, dichlofluanid, diclofen, diclomezine, dichloran, diethofencarb, dimethomorph, diniconazole, dithianon, epoxiconazole, famoxadone, fenarimol, fenbuconazol, fenfuram, fenpiclonil, fentin, fluazinam, fludioxonil, fluoroimide, fluquinconazole, flusulfamide, flutolanil, folpet, hexachlorobenzene, hexaconazole, imibenconazole, ipconazole, iprodione, kresoxim-methyl, manzeb, maneb, mepanipyrim, mepronil, metconazole, metiram, nickel bis(dimethyl dithiocarbamate), nuarimol, oxine copper, oxophosphoric acid, pencycuron, phthalide, procymidone, propineb, quintozene, sulfur, tebuconazole, teclofthalam, tecnazene, thifluzamide, thiophenate-methyl, thiram, tolclofos-methyl, tolylfluanid, triadimefon, triadimenol, triazoxide, triforine, triticonazole, vinclozolin, zineb, and ziram, etc. In addition, the antimicrobial agent which is a natural product includes, for example, Chinese medicine ingredients such as moso bamboo extract, hinokitiol, garlic extract and glycyrrhiza. The antimicrobial agent also includes an inorganic antimicrobial agent such as silver, copper, zinc, tin, lead and gold. Furthermore, zeolite, hydroxyapatite, calcium carbonate, silica gel, aluminum calcium silicate, a polysiloxane compound, zirconium phosphate, zirconium sulfate, an ion exchanger, zinc oxide, etc. may be used as a support for the inorganic antimicrobial agent, if desired. The antimicrobial agent which is a synthetic product includes, for example, 2-pyridinethiol-1-oxide, p-chloro-m-cresol, polyhexamethylene biguanide, hydrochloride, benzethonium chloride, an alkylpolyaminoethylglycine, benzisothiazolin, 5-chloro-2-methyl-4-isothiazolin-3-one, 1,2-benzisothiazolin-3-one, and 2,2'-dithiobis(pyridine-1-oxide), etc.

The ultraviolet absorber includes, as a commercially available product, for example, TINUVIN 571, TINUVIN 460, TINUVIN 213, TINUVIN 234, TINUVIN 329, TINUVIN 326, etc. all produced by BASF.

The filler includes, for example, silica particle and diatomaceous earth, etc. Also, in view of dispersibility, the filler is preferably a particle of which surface is hydrophobized. The method for such a surface treatment includes a method of performing the surface treatment with dimethylpolysiloxane, dimethyldichlorosilane, hexamethylenedisilazane, cyclic dimethylsiloxane, etc. The size of the particle having such a hydrophobized surface is preferably, in terms of the average particle diameter, from 5 nm to 300 nm.

The crosslinking agent includes, for example, an isocyanate-based compound, an epoxy-based compound, a melamine-based compound, a metal chelate compound, an oxazoline-based compound, an azilidine-based compound, an ethyleneimine, etc.

The oil component is contained in a resin (matrix) formed by the polymer component, and the content ratio of the oil component per 100 parts by mass of the polymer component is, for example, from 25 to 400 parts by mass, preferably from 50 to 300 parts by mass, more preferably from 75 to 250 parts by mass, still more preferably from 100 to 200 parts by mass. When 25 parts by mass or more of the oil component is contained per 100 parts by mass of the polymer component, bleed-out of the oil component occurs sufficiently, and the snow accretion/ice accretion prevention effect can be exerted. Also, when the content is 400 parts by mass or less, the strength of the oil-containing layer is not reduced.

Incidentally, in the present invention, as for the content ratio of the polymer component relative to the entire oil-containing layer, the lower limit is preferably 10 mass% or more, more preferably 15 mass% or more, still more preferably 25 mass% or more, and the upper limit is preferably 90 mass% or less, more preferably 80 mass% or less, still more preferably 70 mass% or less. When the content of the polymer component is in the range above, sufficient bleed-out of the oil component occurs, and the snow accretion/ice accretion prevention effect can be exerted.

In order to incorporate the oil component into a resin composed of the polymer component, there is, for example, a method of heating/curing a resin composition prepared by mixing the polymer component, the oil component and, if desired, other components. When the resin composition is heated, the polymer component forms a matrix, and the oil component disperses therein.

The thickness of the oil-containing layer may be appropriately determined according to use but is preferably from 0.05 to 3 mm (from 50 to 3,000 µm). When the thickness of the oil-containing layer is 0.05 mm or more, the outdoor exposure durability is improved and since the amount of the oil component contained can be increased, the bleed effect increases, so that the snow accretion/ice accretion prevention function can be enhanced. In addition, when the thickness of the oil-containing layer is 3 mm or less, the handleability is improved. As for the thickness of the oil-containing layer, the lower limit is more preferably 0.075 mm or more, still more preferably 0.1 mm or more, and the upper limit is more preferably 2.5 mm or less, still more preferably 2 mm or less.

Here, in the oil-containing layer, the bleed temperature can be appropriately set according to the use environment to allow the oil component to bleed at a temperature not more than a predetermined temperature. For example, in the case where the predetermined temperature is set to 0°C, an oil component that bleeds at 0°C or less is appropriately selected and used, and the oil component can thereby be caused to bleed from the film when the outside air is 0°C or less.

### <Substrate>

In the film of the present invention, a substrate is preferably provided so as to support the oil-containing layer and maintain the strength of the film.

The material constituting the substrate may be appropriately selected in consideration of the sticking property to a target object and the strength of a product as a whole, etc. but includes, for example, a polyurethane resin, a polyurethane acrylic resin, a rubber-based resin, a vinyl chloride resin, a polyester resin, a silicone resin, elastomers, a fluororesin, a polyamide resin, a polyolefin resin (e.g., polyethylene, polypropylene), an ionomer, a polyethylene terephthalate resin, etc. Among these, in view of the sticking property to a target object, it is preferable to use a polyester resin, an ionomer, or a polyethylene terephthalate resin. This substrate layer may be only one material or two or more materials.

The thickness of the substrate may be appropriately determined according to use but is, for example, preferably from 10 to 300 µm, more preferably from 30 to 250 µm, still more preferably from 50 to 200 µm. By adjusting the layer thickness of the substrate as above, the film has adequate strength and also has excellent handling property.

### <Manufacture of Film>

The film of the present invention can be produced by, for example, a method of forming a coating film by using a resin composition containing a polymer component and an oil component, imparting projections and recesses to a surface of the coating film, and then curing the coating film, or a method of directly or indirectly disposing another member having projections and recesses on a cured coating film formed using the resin composition above, and causing the cured coating film to conform to the projections and recesses of another member.

Specifically, the production method of the film of the present invention includes the following steps of (a) and (b), or a step of (c):
(a) a step of forming a coating film by using a resin composition containing a polymer component and an oil component and forming a concave-convex configuration on a surface of the coating film, and
(b) a step of curing the coating film having formed thereon the concave-convex configuration,
   or
(c) a step of forming a coating film by using a resin composition containing a polymer component and an oil component, curing the coating film, and then disposing, on one surface of the cured coating film, a member having projections and recesses on its surface so as to form a concave-convex configuration on a surface of the coating film.

The film of the present invention can be suitably produced by the above-described production method.

### (Step (a))

In the step (a), first, a resin composition containing a polymer component and an oil component at an arbitrary ratio is prepared. The resin composition may contain other components described above. The resin composition is preferably stirred until the raw material components become uniform, and a stirrer may be used.

In the case where the resin mixture contains air, air bubbles may be contained in the oil-containing layer after forming, and in such a case, it is preferable to carry out degassing, because there is a possibility that the film strength is reduced or the product appearance deteriorates. The method for degassing includes, for example, a method of performing defoaming for several seconds to about 5 minutes in a planetary stirring device, and a method of performing a decompression treatment for several seconds to about 30 minutes under vacuum.

The resin composition obtained as above is applied onto a coating bed or a substrate to form a coating film (oil-containing layer). The coating method is not particularly limited as long as the coating film is applied to have a film thickness of 0.05 to 3 mm, and the method includes, for example, a cast coating method using an applicator, and a brush coating method, etc.

Thereafter, a concave-convex configuration is formed on a surface of the coating film. The method for forming a concave-convex configuration on the coating film includes, for example, a method where a roller having projections and recesses on its circumferential surface is closely contacted with the coating film to transfer the projections and recesses to the coating film, a method where a punching sheet having projections and recesses on its surface is pressed against the coating film to transfer the projections and recesses to the coating film, and a method where a sandpaper having projections and recesses on its surface is pressed against the coating film to transfer the projections and recesses to the coating film, etc. Here, in the case of applying the resin composition by use of a brush, depending on the material of the brush, not only coating is effected but also desired projections and recesses can be formed on a surface of the coating film.

Incidentally, the height of the projection/recess can be appropriately adjusted by controlling the pressing force of a processing member for imparting a concave-convex configuration, such as roller or punching sheet.

### (Step (b))

In the step (b), the coating film having formed thereon a concave-convex configuration obtained in the step (a) is cured. As for the curing method, the curing can be performed by a conventionally known method, and the method includes, for example, a method of heating/drying the coating film, a method of curing the coating film by irradiation with an ultraviolet ray, and a method of adding a crosslinking agent.

In the case of heating/drying, the coating film is preferably heated at 100 to 160°C for 1 to 300 minutes.

### (Step (c))

In the step (c), first, a coating film is formed using a resin composition containing a polymer component and an oil component at an arbitrary ratio. As for the coating film forming method, this can be performed in the same manner as in the step (a) above.

Thereafter, the coating film is cured to obtain a cured coating film. As for the curing method, the curing can be performed by a conventionally known method, and the method includes, for example, a method of heating/drying the coating film, a method of curing the coating film by irradiation with an ultraviolet ray, and a method of adding a crosslinking agent.

In the case of heating/drying, the coating film is preferably heated at 100 to 160°C for 1 to 300 minutes.

After the curing, a member having projections and recesses on its surface is disposed on one surface of the cured coating film, specifically, a substrate surface on the back side of the coating film in the case of the cured coating film having a substrate, or on either one main surface out of two main surfaces in the case of the cured coating film alone. The member includes, for example, a pressure-sensitive adhesive layer having projections and recesses on its surface (for example, a substrate-less pressure-sensitive adhesive sheet), and a substrate having projections and recesses on its surface. When a member having projections and recesses is disposed, the cured coating film is caused to conform to projections and recesses of the member, and consequently, a concave-convex configuration is formed on a surface of the coating film.

In this way, the film of the present invention is obtained.

The thickness of the film of the present invention can be appropriately selected from the range of 0.06 to 3.5 mm by taking into account the desired strength of the film or the size, etc. of the target object (structure) to which the film is applied.

In the present invention, the arithmetic mean height (Sa) in a 3.2 cm×3.2 cm region on a surface of the oil-containing layer of the film is 4 µm or more. When the arithmetic mean height (Sa) is 4 µm or more, desired effects of the present invention can be obtained. As for the arithmetic mean height (Sa), the lower limit is preferably 4.3 µm or more, more preferably 5 µm or more, still more preferably 10 µm or more, and the upper limit is preferably 100 µm or less, more preferably 75 µm or less, still more preferably 50 µm or less.

Incidentally, the arithmetic mean height (Sa) can be determined by taking a picture of the surface of the film with a laser microscope (for example, "OPTELICS HYBRID" manufactured by Lasertec Corporation) and calculating the average height in a 3.2 cm×3.2 cm region.

Also, in the present invention, the maximum pitch distance of the concave-convex configuration is preferably 2,000 µm or more. When the maximum pitch distance is 2,000 µm or more, a sufficient concave-convex configuration is formed in the film surface and therefore, the film has excellent snow sliding property. The maximum pitch distance of the concave-convex configuration is more preferably 2,500 µm or more, and the upper limit is preferably 60,000 µm or less, more preferably 55,000 µm or less.

The film of the present invention is used by providing it as a surface covering material on a surface of a target object (structure). The target object can be used without any particular limitation as long as it is an object exposed to a natural environment such as snowfall or wind/snow, etc., and specifically, the target object includes an aircraft, a railroad, an automobile, a wind-power generator, housing, a traffic signal, a signboard, etc.

### EXAMPLES

The present invention is described in greater detail below by referring to Examples and Comparative Examples, but the present invention is not limited to the following Examples.

Incidentally, in Examples and Comparative Examples, the "parts" means parts on a mass basis.

### (Production Example 1: Preparation of Resin Composition)

50 Parts of a silicone resin obtained by mixing KE-1950-50A and KE-1950-50B at a mass ratio of 1:1 (both produced by Shin-Etsu Chemical Co., Ltd., a two-component RTV rubber), 30 parts of KF-96-50cs (produced by Shin-Etsu Chemical Co., Ltd., silicone oil), and 20 parts of TSF-437 (produced by Momentive Performance Materials Inc., silicone oil) were uniformly stirred and mixed to prepare a resin composition.

### (Production Example 2: Preparation of Resin Composition)

50 Parts of a silicone resin obtained by mixing KE-1950-50A and KE-1950-50B at a mass ratio of 1:1 (both produced by Shin-Etsu Chemical Co., Ltd., a two-component RTV rubber) and 50 parts of ethyl acetate (produced by FUJIFILM Wako Pure Chemical Corporation) were uniformly stirred and mixed to prepare a resin composition.

### (Example 1)

The resin composition prepared in Production Example 1 was uniformly applied onto a polyethylene terephthalate (PET)-made film (film thickness: 125 µm) by using an applicator to give an oil-container layer having a dry thickness of 150 µm. Projections and recesses were formed on the coating film by using a roller having projections and recesses on its circumferential surface. After that, the coating film was dried at 150°C for 10 minutes to form an oil-containing layer, and the film of Example 1 was thus manufactured.

A picture of the surface of the film was taken with a laser microscope ("OPTELICS HYBRID" manufactured by Lasertec Corporation) and when a measurement was performed in a 3.2 cm×3.2 cm region and the average height was calculated, the arithmetic mean height (Sa) was 4.4±1.0 µm.

### (Example 2)

The film of Example 2 was manufactured in the same manner as in Example 1 except that projections and recesses were formed on the coating film by using a punching sheet. The arithmetic mean height (Sa) on the film surface was 15.9±6.1 µm.

### (Example 3)

The film of Example 3 was manufactured in the same manner as in Example 1 except that a roller different from that in Example 1 was used. The arithmetic mean height (Sa) on the film surface was 20.9±3.3 µm.

### (Example 4)

The film of Example 4 was manufactured in the same manner as in Example 1 except that a roller different from that in Example 1 was used. The arithmetic mean height (Sa) on the film surface was 21.4±5.3 µm.

### (Example 5)

The film of Example 5 was manufactured in the same manner as in Example 2 except that a punching sheet different from that in Example 2 was used. The arithmetic mean height (Sa) on the film surface was 24.9±5.0 µm.

### (Example 6)

The film of Example 6 was manufactured in the same manner as in Example 1 except that a roller different from that in Example 1 was used. The arithmetic mean height (Sa) on the film surface was 26.1±5.2 µm.

### (Example 7)

The film of Example 7 was manufactured in the same manner as in Example 1 except that a roller different from that in Example 1 was used. The arithmetic mean height (Sa) on the film surface was 30.3±6.1 µm.

### (Example 8)

The film of Example 8 was manufactured in the same manner as in Example 1 except that a roller different from that in Example 1 was used. The arithmetic mean height (Sa) on the film surface was 46.2±10.2 µm.

### (Example 9)

The resin composition prepared in Production Example 1 was uniformly applied onto a polyethylene terephthalate (PET)-made film (film thickness: 125 µm) by using an applicator to give an oil-container layer having a dry thickness of 150 µm and dried at 150°C for 10 minutes to form an oil-containing layer. After that, a pressure-sensitive adhesive having a concave-convex configuration with a minimum pitch distance of 1,500 µm and a maximum pitch distance of 5,000 µm was disposed on the substrate surface of the film to manufacture the film of Example 9. The arithmetic mean height (Sa) on the film surface was 8.7±2.8 µm.

### (Comparative Example 1)

The resin composition prepared in Production Example 1 was uniformly applied onto a polyethylene terephthalate (PET)-made film (film thickness: 125 µm) by using an applicator to give an oil-container layer having a dry thickness of 150 µm and dried at 150°C for 10 minutes to form an oil-containing layer, and the film of Comparative Example 1 was thus manufactured. The arithmetic mean height (Sa) on the film surface was 3.4±1.2 µm.

### (Comparative Example 2)

The film of Comparative Example 2 was manufactured in the same manner as in Comparative Example 1 except that the resin composition prepared in Production Example 2 was used. The arithmetic mean height (Sa) on the film surface was 4.1±0.5 µm.

### (Comparative Example 3)

The resin composition prepared in Production Example 2 was uniformly applied onto a polyethylene terephthalate (PET)-made film (film thickness: 125 µm) by using an applicator to give an oil-container layer having a dry thickness of 150 µm. Projections and recesses were formed on the coating film by using a roller having projections and recesses on its circumferential surface. After that, the coating film was dried at 150°C for 10 minutes to form an oil-containing layer, and the film of Comparative Example 3 was thus manufactured. The arithmetic mean height (Sa) on the film surface was 20.4±7.0 µm.

### (Comparative Example 4)

The film of Comparative Example 4 was manufactured in the same manner as in Comparative Example 3 except that a roller different from that in Comparative Example 3 was used. The arithmetic mean height (Sa) on the film surface was 29.9±4.6 µm.

### (Comparative Example 5)

The film of Comparative Example 5 was manufactured in the same manner as in Comparative Example 3 except that a roller different from that in Comparative Example 3 was used. The arithmetic mean height (Sa) on the film surface was 32.2±2.1 µm.

With respect to the films of Examples and Comparative Examples manufactured above, the following snow sliding test was performed.

The film manufactured in each of Examples and Comparative Examples was cut into a size of 10 cm (length)×10 cm (width) (area: 100 cm²) and stuck to an acrylic board of 10 cm (length)×10 cm (width) (area: 100 cm²) by arranging the oil-containing layer to serve as a surface, and the laminate was placed in a test room set to an environmental temperature of 1°C. About 20 g of a snowpack of wet snow was caused to adhere to the horizontally disposed film surface. The snowpack-adhered acrylic board was disposed to incline at 60° with respect to the floor surface.

Thereafter, the time until the snowpack fell (snow sliding time) was measured. The results are shown in Table 1.

### [Table 1]

**Table 1**

| | | Unit | Example | | | | | | | | | Comparative Example | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| Concave-convex configuration of film | Arithmetic surface height per 10 cm² (Sa) | µm | 4.4±1.0 | 15.9±6.1 | 20.9±3.3 | 21.4±5.3 | 24.9±5.0 | 26.1±5.2 | 30.3±6.1 | 46.2±10.2 | 8.7±2.8 | 3.4±1.2 | 4.1±0.5 | 20.4±7.0 | 29.9±4.6 | 32.2±2.1 |
| | Maximum depth | µm | 14 | 72 | 131 | 62 | 144 | 183 | 193 | 190 | 3.5 | 4 | 8 | 87 | 168 | 192 |
| | Minimum pitch distance | µm | 1000 | 1300 | 1200 | 1500 | 1500 | 4500 | 2000 | 1700 | 1500 | - | - | 1600 | 650 | 1200 |
| | Maximum pitch distance | µm | 12000 | 2700 | 19000 | 5000 | 2000 | 53000 | 35000 | 22000 | 5000 | - | - | 8000 | 2400 | 10000 |
| Presence or absence of oil bleed | | | present | present | present | present | present | present | present | present | present | present | none | none | none | none |
| Snow sliding time | | sec | 1934 | 122 | 170 | 280 | 530 | 388 | 123 | 91 | 60 | 3519 | >3519 | >3519 | >3519 | >3519 |

Comparative Example 1 is a film including an oil-containing layer on a film surface and not having a concave-convex configuration, and Comparative Examples 2 to 5 each are an example in which a film surface is constituted by a non-oil-containing layer (Comparative Examples 3 to 5 have a concave-convex configuration). In Comparative Example 1, the snow sliding time is shortened, compared with Comparative Examples 2 to 5, but in Examples 1 to 9, the snow sliding time is significantly shorter than that in Comparative Example 1, and snowpack can be allowed to naturally fall in a shorter time, revealing that the films have an excellent snow accretion/ice accretion prevention effect.

While the invention has been described in detail and with reference to specific embodiments thereof, it will be apparent to one skilled in the art that various changes and modifications can be made therein without departing from the spirit and scope of the invention. This application is based on Japanese Patent Application (Patent Application No. 2019-061862) filed on March 27, 2019, the contents of which are incorporated herein by way of reference.

### INDUSTRIAL APPLICABILITY

The film of the present invention is useful for preventing adhesion of snow or ice to a surface of an aircraft, a railroad, an automobile, a wind-power generator, housing, a traffic signal, a signboard, etc.

## Claims

1. A film comprising, as an outermost layer, an oil-containing layer containing an oil component in a resin, wherein
the oil component bleeds from a surface of the oil-containing layer at a temperature not more than a predetermined temperature, the surface of the oil-containing layer has a concave-convex configuration, and
an arithmetic mean height (Sa) in a 3.2 cm×3.2 cm region on the surface of the oil-containing layer is 4 µm or more.

2. The film according to claim 1, wherein the arithmetic average height (Sa) is 10 µm or more.

3. The film according to claim 1 or 2, wherein a maximum pitch distance of the concave-convex configuration is 2,000 µm or more.

4. The film according to any one of claims 1 to 3, wherein the film is a film for preventing snow or ice from accumulating with time on a surface of a target object.

5. A method for producing a film, comprising the following steps of (a) and (b), or a step of (c)
(a) a step of forming a coating film by using a resin composition containing a polymer component and an oil component and forming a concave-convex configuration on a surface of the coating film, and
(b) a step of curing the coating film having formed thereon the concave-convex configuration, or
(c) a step of forming a coating film by using a resin composition containing a polymer component and an oil component, curing the coating film, and then disposing, on one surface of the cured coating film, a member having projections and recesses on its surface so as to form a concave-convex configuration on a surface of the coating film.

6. The production method of a film according to claim 5, wherein the production method is a method for producing the film according to any one of claims 1 to 4.
